# EUROPEAN PATENT APPLICATION

(11) **EP 2 373 101 A1**
(43) Date of publication of application: **05.10.2011**
(21) Application number: 11002792.7
(22) Date of filing: 04.04.2011
(51) Int. Cl.: H04W 60/00

(54) **Method to inform user equipment to perform register procedure in wireless communications system and related communication device**

(30) Priority: 02.04.2010 US 320329 P; 31.03.2011 US 76442
(71) Applicant: HTC Corporation, Taoyuan County 330 (TW)
(72) Inventor: Chen, Te-Ming, Taoyuan City Toayuan County 330 (TW)
(74) Representative: Wagner, Karl H.

(57) **Abstract**

Method for a network requesting a UE to initiate a register procedure includes the network sending a paging message to the UE to request the UE to initiate the register procedure; wherein the UE is in a RRC connected mode, and register state of the UE is invalid due to a network failure. The UE is allowed to acquire specific information other than an ETWS notification, a CMAS notification, or a system information change indicator from the paging message.

## Description

### Cross Reference To Related Applications

This application claims the benefit of U.S. Provisional Application No. 61/320,329, filed on Apr. 2, 2010 and entitled "wireless device paging behaviours", the contents of which are incorporated herein.

### Background of the Invention

### 1. Field of the Invention

The present invention relates to a method of a network paging a user equipment in a wireless communication system and related communication device, and more particularly, to a method of a network paging a user equipment in a state other than radio resource control (RRC) connected state in a wireless communication system and related communication device.

### 2. Description of the Prior Art

A long-term evolution (LTE) system, initiated by the third generation partnership project (3GPP), is now being regarded as a new radio interface and radio network architecture that provides a high data rate, low latency, packet optimization, and improved system capacity and coverage. In the LTE system, a radio access network known as an evolved universal terrestrial radio access network (E-UTRAN) includes a plurality of evolved Node-Bs (eNBs) for communicating with a plurality of user equipments (UEs) and communicates with a core network (CN) including a mobility management entity (MME), serving gateway, etc for NAS (Non Access Stratum) control.

To receive services, e.g. evolved packet system (EPS) services, the UE needs to register with the network. During a register procedure, e.g. attach procedure, the UE may first send an "ATTACH REQUEST" message to the core network (e.g. MME). The "ATTACH REQUEST" message includes an international mobile subscriber identity (IMSI), which is stored in a subscriber identity module (SIM) card inside the mobile device, e.g. UE. Because the IMSI uniquely addresses each subscriber, it is seen as critical information from a security point of view and its transmission clearly has to be avoided as much as possible. By spying on and monitoring the IMSI, eavesdropper may track a subscriber's location, movement, and activities. So the network allocates a temporary UE identity, for example a system architecture evolution (SAE) temporary mobile subscriber identity (S-TMSI), to the UE and renews it frequently in order to reduce the use of IMSI.

Besides, if a UE without a valid IMSI (e.g. the UE does not have a SIM card or the SIM card is invalid) would like to make an emergency call, the UE can still initiates a register procedure for emergency bearer services. First, the UE sends an "ATTACH REQUEST" message to the network. In such case, the "ATTACH REQUEST" message is allowed to include an international mobile equipment identity (IMEI) instead of IMSI. An IMEI is a unique number which shall be allocated to each individual UE in the public land mobile network (PLMN) and shall be unconditionally implemented by the manufacturer. Then, the network also allocates a temporary UE identity, e.g. S-TMSI, to the UE and renews it frequently in order to reduce the use of IMEI.

In the radio resource control (RRC) standard, the network pages UE(s) in the following conditions: (1) to transmit paging information to a UE in the RRC idle mode; (2) to inform UEs in the RRC idle mode and UEs in the RRC connected mode about a system information change indicator; (3) to inform about an earthquake and tsunami warning system (ETWS) primary notification and/or ETWS secondary notification; (4) to inform about a commercial mobile alert system (CMAS) notification. From the above conditions, it can be seen that if the UE is not in the RRC idle mode, except for the system information change indicator/ETWS notification/CMAS notification, the network does not page the UE. For example, if a UE is in the RRC connected mode, the network is not allowed to transmit paging information to the UE.

In some abnormal cases, for one example, due to a network failure, the S-TMSI is not available or becomes invalid, or the tracking area identity (TAI) list is not available, the network have to page the UE to initiate register procedure again. However, if the UE is in the RRC connected mode, the network is not allowed to page the UE. Thus, the UE is not informed to register again in time.

### Summary of the Invention

The present invention provides a method for a network requesting a UE to initiate a register procedure. The method comprises the network sending a paging message to the UE to request the UE to initiate the register procedure; wherein the UE is in a radio resource control (RRC) connected mode, and register state of the UE is invalid.

The present invention further provides a method for a network requesting a user equipment (UE) to initiate a register procedure. The method comprises a network sending a specific message to the UE to request the UE to initiate the register procedure; wherein the UE is in a radio resource control (RRC) connected mode, and register state of the UE is invalid.

The present invention further provides a communication device. The communication device comprises a central processing unit (CPU) and memory. The memory contains program code executable by the CPU for performing following steps. The steps comprise receiving a specific message to initiate a register procedure from a network; wherein the communication device is in a radio resource control (RRC) connected mode, and register state of the communication device is invalid.

These and other objectives of the present invention will no doubt become obvious to those of ordinary skill in the art after reading the following detailed description of the preferred embodiment that is illustrated in the various figures and drawings.

### Brief Description of the Drawings

FIG.1 illustrates a schematic diagram of an exemplary wireless communication system.

FIG.2 illustrates a schematic diagram of an exemplary communication device.

FIG.3 which is a flow chart of an exemplary process according to a first embodiment of the present invention.

FIG.4 is a flow chart of an exemplary process according to a second embodiment of the present invention.

### Detailed Description

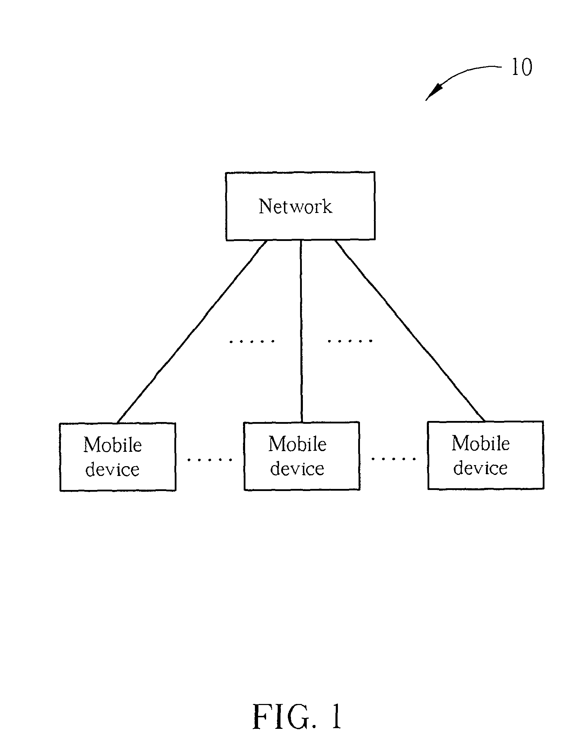

Please refer to FIG.1, which illustrates a schematic diagram of an exemplary wireless communication system 10. Briefly, the wireless communication system 10 is composed of a network and a plurality of mobile devices. The wireless communication system 10 can be a UMTS (Universal Mobile Telecommunications System), an LTE (long-term evolution), LTE-Advance system or any other similar network system. In the LTE system, the network can be referred as a EUTRAN (evolved-UTRAN) comprising a plurality of eNBs or a core network entity (e.g. Mobility Management Entity called MME), whereas the mobile devices are referred as to user equipments (UEs). The UEs can be devices such as mobile phones, computer systems, etc. This terminology will be used throughout the application for ease of reference, however, this should not be construed as limiting the disclosure to any one particular type of network. In some examples, the network and the UE may be seen as a transmitter or receiver according to transmission direction, e.g., for uplink (UL), the UE is the transmitter and the network is the receiver, and for downlink (DL), the network is the transmitter and the UE is the receiver.

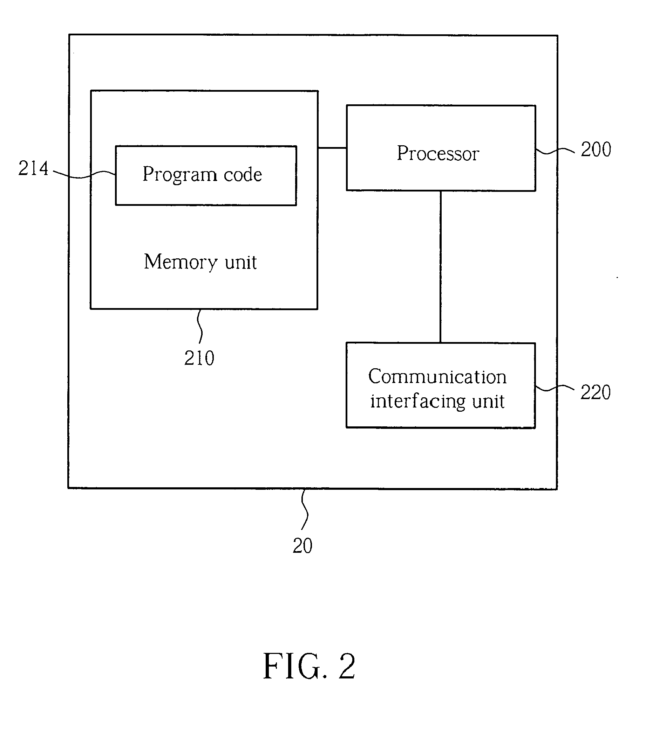

Please refer to FIG.2, which illustrates a schematic diagram of an exemplary communication device 20. The communication device 20 may be the mobile devices or the network shown in FIG. 1 and may include a processor 200 such as a microprocessor or ASIC, a memory unit 210 and a communication interfacing unit 220. The memory unit 210 may be any data storage device that can store program code 214 for access by the processor 200. Examples of the memory unit 210 include but are not limited to a subscriber identity module (SIM), read-only memory (ROM), random-access memory (RAM), CD-ROMs, magnetic tapes, hard disks, and optical data storage devices. The communication interfacing unit 220 may be preferably a radio transceiver and accordingly exchanges wireless signals according to processing results of the processor 200.

To inform the UE in the RRC connected mode to initiate the register procedure when network failure occurs, the present invention changes the behaviors of the paging. The following description explains the details of the present invention.

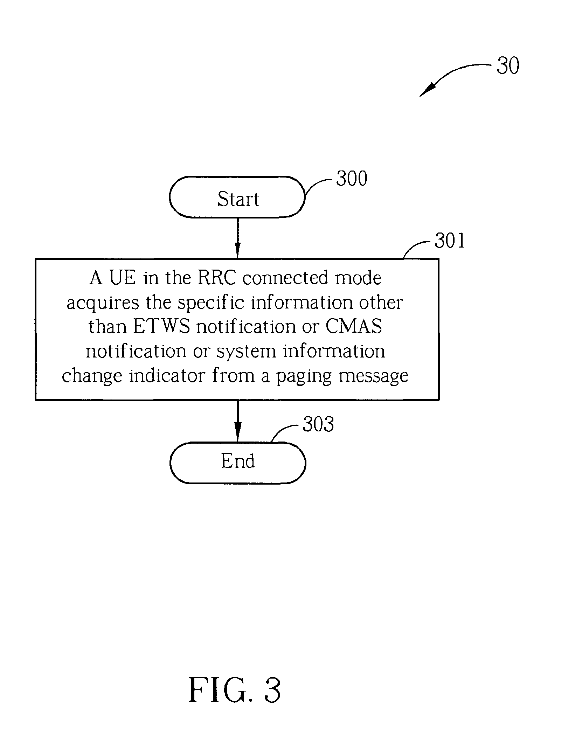

Please refer to FIG.3, which is a flow chart of an exemplary process 30 of the present invention. The process 30 may be compiled into the program code 214 and include the following steps:

Step 300: Start;

Step 301: A UE in the RRC connected mode acquires the specific information S1 other than ETWS notification or CMAS notification or system information change indicator from a paging message S2;

Step 303: End.

In step 301, the network is allowed to page UE in the RRC connected mode. More specifically, other than to transmit the ETWS notification/CMAS notification/system information change indicator (all of them are broadcast information), the network is allowed to transmit a paging message S2 including the specific information S1 to a UE in the RRC connected mode. In this way, if a network failure occurs, causing S-TMSI is not available or becomes invalid, or the tracking area identity (TAI) list is not available, which means the register state of the UE is not valid or available, the UE in the RRC connected mode is able to receive the paging message from the network and to initiate the register procedure according to the paging message.

The specific information S1 is can be a paging information. For example, the specific information S1 can be the field "ue-Identity" and/or the field "cn-Domain" and/or the field "paging cause" in the paging message S2. The field "ue-Identity" can be IMSI and/or IMEI (any identity other than S-TMSI can be possible since S-TMSI is not available due to network failure).

The UE checks if the specific information S1 meets a particular condition. For example, the UE checks if the field "ue-Identity" of the paging message S2 matches the identity of the UE. If so, the UE informs upper layers that the UE receives a paging message S2, and sends the field "ue-Identity" and/or the field "cn-Domain" and/or the field "paging cause" to the upper layers. Then the UE enters the RRC idle mode from the RRC connected mode for engaging RRC reconnection. After the upper layers of the UE receive the above information from the UE, the upper layers of the UE perform the register procedure. The register procedure can be, e.g. attach procedure or tracking area update procedure or global unique temporary identity (GUTI) reallocation procedure, and the network allocates a new identity, e.g. new GUTI, or new S-TMSI to the UE after the register procedure.

Simply speaking, the process 30 provides the network to page UE in another condition: (5) to transmit paging information to a UE in the RRC connected mode when a network failure occurs.

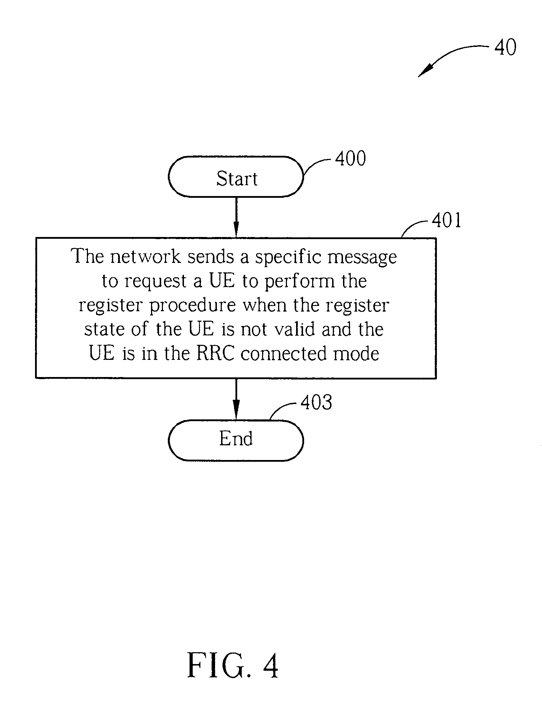

Please refer to FIG.4, which is a flow chart of an exemplary process 40 of the present invention. The process 40 may be compiled into the program code 214 and include the following steps:

Step 400: Start;

Step 401: The network sends a specific message S3 to request a UE to perform the register procedure when the register state of the UE is not valid and the UE is in the RRC connected mode;

Step 403: End.

In the step 401, the specific message S3 can be a paging message, an RRC connection release message, a GUTI reallocation command message, or a dedicated message to request the UE to perform register procedure.

If the specific message S3 is a paging message, then the network includes a field "ue-Identity" (which can be IMSI and/or IMEI) in the paging message, and the UE check if the field "ue-Identity" matches the identity of the UE. If so, the UE informs upper layers the need of performing the register procedure, and sends the field "ue-Identity" and/or the field "cn-Domain" and/or the field "paging cause" to the upper layers. Then the UE enters the RRC idle mode from the RRC connected mode for engaging RRC reconnection. After the upper layers of the UE receive the above information from the UE, the upper layers of the UE perform the register procedure. The register procedure can be, e.g. attach procedure or tracking area update procedure or global unique temporary identity (GUTI) reallocation procedure, and the network allocates a new identity, e.g. new GUTI, or new S-TMSI to the UE after the register procedure.

If the specific message S3 is an RRC connection release message, the network includes a specific release cause in the RRC connection release message to request the UE to perform the register procedure. For example, the specific release cause can be "loadBalancing TAURequeired", or a dedicated release cause. After the UE receives the RRC connection release message including the specific release cause, the UE enters the RRC idle mode for engaging RRC reconnection and informs the received specific release cause to the upper layers. Then the upper layers of the UE perform the register procedure. The register procedure can be, e.g. attach procedure or tracking area update procedure or GUTI reallocation procedure, and the network allocates a new identity, e.g. new GUTI, or new S-TMSI to the UE after the register procedure.

If the specific message S3 is a GUTI reallocation command message, after the UE receives the GUTI reallocation command message, the UE enters the RRC idle mode for engaging RRC reconnection and informs the received GUTI reallocation command to the upper layers. Then the upper layers of the UE perform the register procedure. The register procedure can be, e.g. attach procedure or tracking area update procedure or GUTI reallocation procedure, and the network allocates a new identity, e.g. new GUTI, or new S-TMSI to the UE after the register procedure.

Simply speaking, the process 40 provides the network to request the UE in the RRC connected mode to perform the register procedure when a network failure occurs.

To sum up, the present invention provides methods to inform the UE in the RRC connected mode to perform the register procedure, especially when the S-TMSI is not available or becomes invalid, or the TAI list is not available due to a network failure, providing great convenience.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method for a network requesting a UE to initiate a register procedure, comprising:
the network sending a paging message to the UE to request the UE to initiate the register procedure;
wherein the UE is in a radio resource control (RRC) connected mode, and register state of the UE is invalid.

2. The method of claim 1, wherein the UE acquires a specific information other than an ETWS notification, a CMAS notification, or a system information change indicator from the paging message.

3. The method of claim 2, wherein the specific information includes identity of the UE other than a system architecture evolution (SAE) temporary mobile subscriber identity (S-TMSI) of the UE, wherein the identity included in the specific information is an international mobile subscriber identity (IMSI) or an internal mobile equipment identity (IMEI) of the UE.

4. The method of claim 3, wherein the UE checks if the identity included in the specific information matches identity of the UE, wherein when the identity included in the specific information matches the identity of the UE, the UE informs an upper layer that the paging message is received.

5. A method for a network requesting a user equipment (UE) to initiate a register procedure, comprising:
a network sending a specific message to the UE to request the UE to initiate the register procedure;
wherein the UE is in a radio resource control (RRC) connected mode, and register state of the UE is invalid.

6. The method of claim 5, wherein the specific message is an RRC connection release message.

7. The method of claim 6, wherein the network includes a specific release cause in the RRC connection release message.

8. The method of claim 7, wherein the specific release cause is "loadBalancingTAURequired" or a dedicated release cause to ask the UE to perform the register procedure.

9. The method of claim 5, wherein the specific message is a global unique temporary identity (GUTI) reallocation command message.

10. The method of claim 9, wherein the UE performs a GUTI reallocation procedure after receiving the GUTI reallocation command message and the network allocates a new identity to the UE.

11. The method of claim 5, wherein the UE enters an RRC idle mode after receiving the specific message.

12. The method of claim 5, wherein the specific message is a dedicated message to request the UE to perform the register procedure.

13. The method of claim 5, wherein the register procedure is an attach procedure or a tracking area update procedure.

14. A communication device comprising a central processing unit (CPU) and memory, the memory containing program code executable by the CPU for performing following steps:
receiving a specific message to initiate a register procedure from a network;
wherein the communication device is in a radio resource control (RRC) connected mode, and register state of the communication device is invalid.

15. The communication device of claim 14, wherein the specific message is a paging message, and the paging message includes a specific field, and the specific field includes identity of the communication device other than a system architecture evolution (SAE) temporary mobile subscriber identity (S-TMSI) of the communication device.

16. The communication device of claim 15, wherein the communication device checks if the identity included in the specific field matches identity of the communication device, wherein when the identity included in the specific field matches the identity of the communication device, the communication device informs an upper layer that the paging message is received.

17. The communication device of claim 16, wherein the communication device sends the identity included in the specific field to the upper layer.

18. The communication device of claim 14, wherein the communication device in the RRC connected state is allowed to acquire specific paging information other than broadcast information.

19. The communication device of claim 14 wherein the specific message is an RRC connection release message, and the RRC connection release message includes a specific release cause.

20. The communication device of claim 19, wherein the specific release cause is "loadBalancingTAURequired" or a dedicated release cause to ask the communication device to perform the register procedure.

21. The communication device of claim 14, wherein the specific message is a global unique temporary identity (GUTI) reallocation command message, and the communication device performs a GUTI reallocation procedure after receiving the GUTI reallocation command message and the network allocates a new identity to the communication device.

22. The communication device of claim 14, wherein the communication device enters an RRC idle mode after receiving the specific message.

23. The communication device of claim 14 wherein the specific message is a dedicated message to request the communication device to perform the register procedure.
